(19) Europäisches Patentamt
European Patent Office
Office européen des brevets

(11) **EP 3 667 782 A1**

(12) **EUROPEAN PATENT APPLICATION**
published in accordance with Art. 153(4) EPC

(43) Date of publication:
**17.06.2020 Bulletin 2020/25**

(51) Int Cl.:
*H01M 4/38* (2006.01)    *H01M 4/36* (2006.01)
*H01M 4/48* (2010.01)    *H01M 4/587* (2010.01)

(21) Application number: **18844888.0**

(22) Date of filing: **10.08.2018**

(86) International application number:
**PCT/JP2018/030023**

(87) International publication number:
**WO 2019/031597 (14.02.2019 Gazette 2019/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2017 JP 2017155537**

(71) Applicant: **Showa Denko K.K.**
**Tokyo 105-8518 (JP)**

(72) Inventors:
• **ISHII Nobuaki**
**Tokyo 105-8518 (JP)**
• **ITO Yuji**
**Tokyo 105-8518 (JP)**
• **OKAMURA Shota**
**Tokyo 105-8518 (JP)**

(74) Representative: **Strehl Schübel-Hopf & Partner**
**Maximilianstrasse 54**
**80538 München (DE)**

(54) **LITHIUM ION SECONDARY BATTERY NEGATIVE ELECTRODE MATERIAL AND LITHIUM ION SECONDARY BATTERY**

(57)    A negative electrode material for a lithium ion secondary battery, comprising carbon-coated composite material comprising a composite material comprising silicon-containing particles, graphite particles and an amorphous carbon, and an additional amorphous carbon that coats the composite material, wherein the carbon-coated composite material has a ratio D/(A+B+C) of not more than 0.015, or less of a square measure (D) of a peak in the region of 99 to 105 eV to a total of a square measure (A) of a peak in the region of 396 to 400 eV, a square measure (B) of a peak in the region of 283 to 288 eV, and a square measure (C) of a peak in the region of 530 to 536 eV, , as observed by X-ray photoelectron spectroscopy (XPS), and a ratio S/T of a Brunauer-Emmett-Teller (BET) specific surface area S to a specific surface area T of sphere approximation calculated based on a volume-based cumulative particle size distribution measured by a laser diffraction method, of not more than 7.3.

[Fig. 1]

**Description**

TECHNICAL FIELD

The present invention relates to a negative electrode material for a lithium ion secondary battery and uses thereof. More particularly, the present invention relates to a negative electrode material from which a lithium ion secondary battery having excellent charge/discharge cycle characteristics can be obtained, an electrode comprising the negative electrode material, and a lithium ion secondary battery comprising the negative electrode material.

BACKGROUND ART

Graphite is generally used as a negative electrode material for a lithium ion secondary battery. Theoretical capacity of graphite is 372 mAh/g. Theoretical capacity of Si or Sn is higher than that of graphite, and therefore, if Si or Sn can be used as the negative electrode material, a lithium ion secondary battery having high capacity can be provided. However, particles containing Si or Sn have low electric conductivity. Further, volume change associated with intercalation and deintercalation of lithium ion is large, so that charge/discharge efficiency is rapidly deteriorated. Various materials to solve the problems have been proposed.

For example, Patent Document 1 discloses a negative electrode material for a lithium secondary battery, composed of silicon particles and a carbon precursor, in which a covering layer composed of a non-graphitic carbon material is formed on a surface of the silicon particles, and a peak intensity ratio of silicon to carbon in X-ray photoelectron spectroscopy analysis is 0 to 0.2.

Patent Document 2 discloses a negative electrode material for a lithium ion secondary battery, comprising silicon particles and a layer composed of carbon on a surface of the silicon particles, wherein the particles have average particle size of 5 nm or more and 100 nm or less, and a square measure of a peak in the vicinity of 104 eV derived from silicon oxide is smaller than 25% of a sum of square measures of peaks in the vicinity of 100 eV derived from silicon and silicon-carbon in X-ray photoelectron spectroscopy analysis.

Patent Document 3 discloses a negative electrode material for a lithium secondary battery, comprising Si particles having an average particle diameter ($D_{50}$) of 0.05 to 5 $\mu$m and several types of carbonaceous materials, and having an oxygen content of 5% by weight or less.

Patent Document 4 discloses a composite electrode material comprising graphite particles, amorphous carbon, and silicon, having the silicon content in terms of $SiO_2$ of 40 to 80% by weight, the true density of $1.8 \times 10^3$ kg/m$^3$ or more, the tap density of $0.8 \times 10^3$ kg/m$^3$ or more, and the specific surface area of $8 \times 10^3$ m$^2$/kg or less, and having one peak in the region of 102.5 to 107.5 eV in Si2P spectrum in XPS.

CITATION LIST

PATENT DOCUMENTS

Patent Document 1 : JP 2004-259475 A
Patent Document 2 : WO 2014/007161 A
Patent Document 3 : JP 2008-112710 A
Patent Document 4 : JP 2002-231225 A

SUMMARY OF THE INVENTION

PROBLEMS TO BE SOLVED BY THE INVENTION

An object of the present invention is to provide a negative electrode material for a lithium ion secondary battery, from which a lithium ion secondary battery having large discharge capacity and excellent charge/discharge cycle characteristics can be obtained.

MEANS FOR SOLVING THE PROBLEMS

The present invention includes the following embodiments.

[1] A negative electrode material for a lithium ion secondary battery, comprising a carbon-coated composite material comprising a composite material comprising silicon-containing particles, graphite particles and an amorphous carbon, and an additional amorphous carbon with which the composite material is coated, wherein the carbon-coated composite material has a ratio D/(A+B+C) of a square measure (D) of a peak in the region of 99 to 105 eV to a total of a square measure (A) of a peak in the region of 396 to 400 eV, a square measure (B) of a peak in the region of 283 to 288 eV, and a square measure (C) of a peak in the region of 530 to 536 eV, of not more than 0.015, as observed by X-ray photoelectron spectroscopy (XPS), and a ratio S/T of a BET specific surface area S to a specific surface area T of sphere approximation calculated based on a volume-based cumulative particle size distribution measured by a laser diffraction method, of not more than 7.3.

[2] The negative electrode material for a lithium ion secondary battery according to the embodiment [1], wherein the carbon-coated composite material has: $I_D/I_G$ of 0.2 to 4, $I_{Si}/I_D$ of 0.01 to 1.2, and $(I_{Si}/I_D)/(I_D/I_G)$ of 0.05 to 0.3, as determined by Raman spectroscopy.

[3] The negative electrode material for a lithium ion secondary battery according to the embodiment [1] or [2], wherein the graphite particles have: $d_{002}$ of not more than 0.337 nm, and $L_c$ of 50 nm to 1000 nm.

[4] The negative electrode material for a lithium ion secondary battery according to any one of the embodiments [1] to [3], wherein the silicon-containing particles, the graphite particles and the amorphous carbon adhere to each other with no space therebetween in the carbon-coated composite material.

[5] The negative electrode material for a lithium ion secondary battery according to any one of the embodiments [1] to [4], further comprising additional graphite particles.

[6] A slurry or a paste, comprising the negative electrode material for a lithium ion secondary battery according to any one of the embodiments [1] to [5], and a binder.

[7] An electrode comprising the negative electrode material for a lithium ion secondary battery according to any one of the embodiments [1] to [5], and a binder.

[8] A lithium ion secondary battery comprising the negative electrode material for a lithium ion secondary battery according to any one of the embodiments [1] to [5].

[9] A method for producing a carbon-coated composite material, the method comprising:

heat-treating a mixture I at not less than 200 °C and not more than 2000 °C to obtain a composite material comprising silicon-containing particles, an amorphous carbon and graphite particles, the mixture I comprising 6 to 70 parts by mass of the silicon-containing particles, 4 to 50 parts by mass of pitch in terms of residual carbon, 5 to 90 parts by mass of the graphite particles based on 100 parts by mass of a total of an amount of the silicon-containing particles, an amount of the pitch in terms of residual carbon and an amount of the graphite particles;

mixing the obtained composite material and an additional pitch with each other such that a ratio of a mass of the obtained composite material to a mass of the additional pitch in terms of residual carbon is 80/20 to 99.4/0.6 to obtain a mixture II,

and then

heat-treating the obtained mixture II at not less than 200 °C and not more than 2000 °C.

[10] The method according to the embodiment [9], wherein a temperature in the heat-treating of the mixture I is not less than 300 °C and not more than 1000 °C, and a temperature in the heat-treating of the mixture II is not less than 800 °C and not more than 1500 °C.

ADVANTAGEOUS EFFECTS OF THE INVENTION

The negative electrode material for a lithium ion secondary battery of the present invention can provide a lithium ion secondary battery having a large discharge capacity, and excellent charge/discharge cycle characteristics.

BRIEF DESCRIPTION OF THE DRAWING

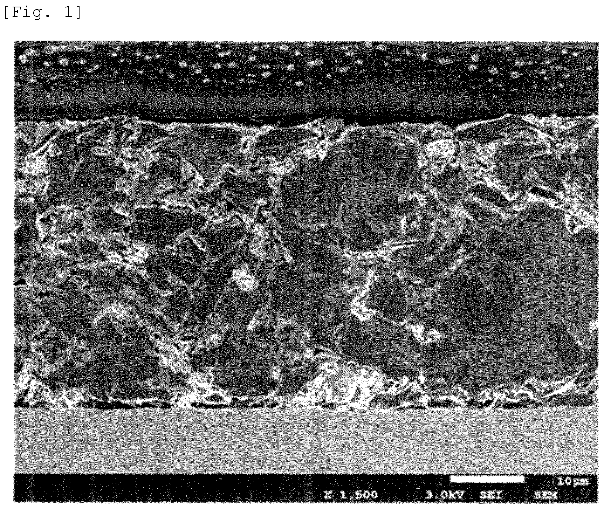

FIG. 1 shows one example of a cross-sectional image of an electrode using a negative electrode material of one embodiment in the present invention.

EMBODIMENTS FOR CARRYING OUT THE INVENTION

The negative electrode material for a lithium ion secondary battery of the present invention comprises a carbon-coated composite material.

The carbon-coated composite material comprises a composite material, and additional amorphous carbon which the composite material is coated with.

The composite material comprises silicon-containing particles, graphite particles and an amorphous carbon.

(Silicon-containing particles)

Preferably, the silicon-containing particles have the particle surface layer containing $SiO_x$ ($0<x\leq2$). A part (core) other than the surface layer may be composed of elemental silicon or may be composed of $SiO_x$ ($0<x\leq2$). An average thickness of the surface layer containing $SiO_x$ is preferably not less than 0.5 nm and not more than 10 nm. When the average thickness of the surface layer containing $SiO_x$ is not less than 0.5 nm, oxidation by air or oxidizing gas can be suppressed. When the average thickness of the surface layer containing $SiO_x$ is not more than 10 nm, increase in irreversible capacity at the initial cycle can be preferably suppressed. This average thickness can be measured by TEM photograph.

The silicon-containing particles have a full width at half maximum of 111 diffraction peak derived from silicon, as observed in the X-ray diffraction with CuKα radiation, of preferably 0.3° to 0.5° as a scatter angle 2θ. When the full width at half maximum is within the range, a balance between the cycle retention ratio and the initial charge/discharge efficiency is improved. Furthermore, when the cycle retention ratio is to be particularly improved in the lithium ion secondary battery, the full width at half maximum of the 111 diffraction peak is preferably 0.3° or more, more preferably 0.4° or more, and further preferably 0.5° or more as the scatter angle 2θ. When the initial charge/discharge efficiency is to be particularly improved in the lithium ion secondary battery, the full width at half maximum of the 111 diffraction peak is preferably 0.5° or less, more preferably 0.3° or less, and further preferably 0.2° or less as the scatter angle 2θ.

The diffraction peak of silicon-containing particles can be measured using, for example, an X-ray diffraction apparatus SmartLab (registered trademark) manufactured by Rigaku Corporation or X-ray diffraction apparatus XRD-6100 manufactured by SHIMADZU CORPORATION.

The full width at half maximum is determined by analyzing a diffraction peak obtained by measuring when the tube voltage is 45 kV, the tube current is 200 mA, the entrance slit and the exit slit in the concentration method are 10 mm, the speed coefficient of the one-dimensional detector is 2.0, and the angular resolution of the goniometer is 1.0 deg using a CuKα radiation. In the analysis, XRD analysis software such as, for example, PDXL2 manufactured by Rigaku Corporation can be used.

The silicon-containing particles have a BET specific surface area of preferably not less than 50 $m^2$/g and not more than 200 $m^2$/g, and more preferably not less than 140 $m^2$/g and not more than 200 $m^2$/g.

It is preferable that the BET specific surface area of silicon-containing particles is large because a particle diameter of the silicon-containing particles is small, an effect of relaxing volume strain accompanying intercalation of Li into a Si crystal phase is enhanced, and expansion and contraction accompanying charge and discharge can be further suppressed. However, when the specific surface area is too large, handling property in production process tends to be deteriorated.

Note here that the BET specific surface area is measured by a multipoint BET method with relative pressures of 0.1, 0.2 and 0.3 by applying nitrogen gas as a probe by using Surface Area & Pore Size Analyzer NOVA 4200e manufactured by Quantachrome Instruments, or NOVA-1200 manufactured by Yuasa Ionics Co., Ltd.

The silicon-containing particles can comprise an element M selected from the other elements in addition to silicon in the particles. Specific examples of the element M can include nickel, copper, iron, tin, aluminum, cobalt, and the like. Two or more elements may be comprised as the element M. The content of the element M is not particularly limited as long as the effect of silicon is not largely inhibited, and the content is, for example, not more than 1 mole relative to 1 mole of silicon atom.

The silicon-containing particles are not particularly limited by a production method thereof. The silicon-containing particles can be produced by, for example, a method disclosed in WO 2012/000858 A.

An amount of the silicon-containing particles comprised in the composite material is preferably not less than 6 parts by mass and not more than 70 parts by mass, more preferably not less than 12 parts by mass and not more than 50 parts by mass, and further preferably not less than 15 parts by mass and not more than 40 parts by mass with respect to 100 parts by mass of the composite material. This range is preferable because balance between the volume change accompanying intercalation and deintercalation of lithium ions, and electric capacity is further improved.

(Graphite particles)

Graphite particles are preferably composed of artificial graphite. Furthermore, the graphite particles are preferably flake particles. The graphite particles have a 50% diameter $D_{50}$ in a volume-based cumulative particle size distribution of preferably 1 μm to 50 μm, more preferably 2 μm to 20 μm, and further preferably 3 μm to 10 μm. It is preferable that when $D_{50}$ of the graphite particles is 1 μm or more, a side reaction is hard to occur during charge and discharge, and when $D_{50}$ of the graphite particles is 50 μm or less, a diffusion speed of lithium ions in the negative electrode material tends to increase and a rate of charge and discharge tends to improve. In a case of an application to a driving power source for an automobile or the like which requires large current generation, $D_{50}$ is preferably 25 $\mu$m or less.

$D_{50}$ is measured using a laser diffraction particle size analyzer, for example, Mastersizer (registered trademark) manufactured by Malvern Instruments Ltd.

The graphite particles have $d_{002}$ of preferably 0.337 nm or less. As $d_{002}$ is smaller, the amount of intercalation and deintercalation of lithium ions per mass increases, which therefore contributes to an improvement in mass energy density. If $d_{002}$ is 0.337 nm or less, optical textures observed by a polarization microscope are almost optical anisotropic textures.

The graphite particles have $L_c$ of preferably not less than 50 nm and not more than 1000 nm. When the energy density per volume is to be especially increased, $L_c$ is preferably not less than 80 nm and not more than 300 nm, and more preferably not less than 90 nm and not more than 250 nm. When battery cycle characteristics are to be particularly improved, $L_c$ is preferably not less than 50 nm and not more than 250 nm. $L_c$ is calculated by analysis of X-ray diffraction pattern of CuK$\alpha$ radiation.

$d_{002}$ and $L_c$ can be measured by a powder X-ray diffraction method. Details thereof are described in 117th Committee material 117-71-A-1(1963) Japan Society for the Promotion of Science, 117th Committee material 117-121-C-5 (1972) Japan Society for the Promotion of Science, and "Carbon" 1963, No.36, p.25-34, etc.

$d_{002}$ and $L_c$ of graphite particles can be calculated based on diffraction peaks of the carbon-coated composite material. The diffraction peaks of the carbon-coated composite material can be measured using, for example, an X-ray diffraction apparatus such as SmartLab (registered trademark) manufactured by Rigaku Corporation or an X-ray diffraction apparatus XRD-6100 manufactured by SHIMADZU CORPORATION. In measurement, CuK$\alpha$ radiation is used, a tube voltage is 45 kV, a tube current is 200 mA, the entrance slit and the exit slit are 10 mm in the concentration method, the speed coefficient of the one-dimensional detector is 2.0, and the angular resolution of the goniometer is 1.0 deg. Then, the measured diffraction peak can be analyzed using XRD analysis software such as, for example, PDXL2 manufactured by Rigaku Corporation. Removal of background and smoothing are carried out, then, a peak of amorphous carbon is removed using software having a peak fitting function such as Origin (registered trade mark) manufactured by LightStone Corp., and $d_{002}$ and $L_c$ of graphite particles can be calculated.

Note here that in production of carbon-coated composite materials, for obtaining amorphous carbon with which the composite material is coated, graphite particles may be subjected to high heat. The maximum temperature at that time is not more than 2000 °C. Even if graphite particles are exposed to this level of heat, the crystal structure of the graphite particles is not changed. Therefore, $d_{002}$ and $L_c$ of graphite particles in the carbon-coated composite material are not changed as those of the raw material.

The graphite particle has a BET specific surface area of preferably not less than 0.4 m$^2$/g and not more than 25 m$^2$/g, further preferably not less than 0.5 m$^2$/g and not more than 20 m$^2$/g, still further preferably not less than 0.5 m$^2$/g and not more than 18 m$^2$/g.

It is preferable that the graphite has a BET specific surface area falling within the above-mentioned range, because excessive binders are not used, a large area in contact with an electrolytic solution can be secured, a lithium ion can be smoothly intercalated and deintercalated, and reaction resistance of a battery can be made smaller. Note here that the BET specific surface area is measured by a multipoint BET method using nitrogen gas as a probe under a relative pressure of 0.1, 0.2 and 0.3.

Examples of the device for measuring the BET specific surface area can include Surface Area & Pore Size Analyzer NOVA 4200e manufactured by Quantachrome Instruments Ltd, or NOVA-1200 manufactured by Yuasa Ionics Co., Ltd.

The graphite particles have a loose bulk density (tapped 0 times) of preferably not less than 0.1 g/cm$^3$, and a powder density (tap density) upon being tapped 400 times of preferably not less than 0.1 g/cm$^3$ and not more than 1.6 g/cm$^3$, more preferably not less than 0.15 g/cm$^3$ and not more than 1.6 g/cm$^3$, and further preferably not less than 0.2 g/cm$^3$ and not more than 1.6 g/cm$^3$.

The loose bulk density is a density obtained by dropping 100 g of a sample into a measuring cylinder from a height of 20 cm and measuring a volume and mass without applying vibration. The tap density is a density obtained by measuring a volume and mass of 100 g of powder tapped 400 times by using Autotap manufactured by Quantachrome Instruments. These measurement methods comply with ASTM B527 or JIS K5101-12-2. A drop height in the Autotap in the tap density measurement is adjusted to 5 mm.

The loose bulk density is preferably not less than 0.7 g/cm$^3$, because the electrode density before being pressed tends to be increased upon coating the powder onto the electrode. Whether or not sufficient electrode density can be obtained by pressing one time can be predicted by the value. Moreover, it is preferable that the electrode density to be reached during pressing is easily adjusted to a desired level by keeping the tap density within the range described above.

The artificial graphite particles can be obtained by graphitizing carbon precursor. As the production method of the artificial graphite particles, for example, a method disclosed in WO 2014/003135 A can be employed.

As a raw material (carbon precursor) of the graphite particles, coal coke and/or petroleum coke can be used. The graphite particles are produced by subjecting the coal coke and/or the petroleum coke to a heat treatment at a temperature of preferably not less than 2000 °C, and more preferably not less than 2500 °C. An upper limit of the temperature of the heat treatment is not particularly limited, but 3200 °C is preferable. The heat treatment described above is preferably conducted under an inert atmosphere. The heat treatment can be conducted by using, for example, an Acheson type graphitization furnace.

The amount of graphite particles comprised in the composite material is preferably 5 to 90 parts by mass, and more preferably 10 to 80 parts by mass with respect to 100 parts by mass of the composite material. Note here that it can be considered that the mass of graphite particles is not changed before and after the producing step of the composite material.

(Amorphous carbon)

In the present invention, amorphous carbon means nongraphitized carbon. For example, amorphous carbon can be produced by carbonizing a carbon precursor. The carbon precursor is not particularly limited, but is preferably hot heavy oil, thermally cracked oil, straight asphalt, blown asphalt, a material derived from petroleum such as tar or petroleum pitch by-produced during ethylene production, coal tar produced during coal dry-distillation, a heavy component obtained by distilling coal tar to remove a low-boiling component, a material derived from coal such as coal tar pitch, and the like, and is particularly preferably petroleum pitch or coal pitch. The pitch is a mixture of a plurality of polycyclic aromatic compounds. Use of the pitch can produce amorphous carbon having little impurities with a high carbonization ratio. The pitch has a small oxygen content, and therefore the silicon-containing particles are hard to be oxidized in carbonization.

The pitch has a softening point of preferably not less than 80 °C and not more than 300 °C. The pitch having an excessively low softening point has a small average molecular weight of the polycyclic aromatic compound constituting the pitch and a high content of volatile matters, and therefore the carbonization ratio is lowered, production cost increases, or further the amorphous carbon having a large amount of fine pores and a large specific surface area is easily obtained. The pitch having an excessively high softening point has a high viscosity, and therefore it tends to be hardly mixed with the silicon-containing particles uniformly. The softening point of the pitch can be measured by a Mettler Method described in ASTM D3104-77.

The pitch has a residual carbon ratio of preferably not less than 20% by mass and not more than 70% by mass, and more preferably not less than 25% by mass and not more than 60% by mass. If the pitch having a low residual carbon ratio is used, the production cost increases, and the amorphous carbon having a large specific surface area is easily obtained. The pitch having a high residual carbon ratio generally has high viscosity, and therefore it tends to be hardly mixed with the silicon-containing particles uniformly.

The residual carbon ratio is determined by a method described below. Solid pitch is pulverized with a mortar or the like, and the pulverized pitch is subjected to thermogravimetric analysis under flow of nitrogen gas. A proportion of mass at 1100 °C to charged mass is defined as the residual carbon ratio. The residual carbon ratio corresponds to a fixed carbon content as measured at a carbonization temperature of 1100 °C in JIS K2425.

The pitch has a quinolone-insoluble (QI) content of preferably not more than 10% by mass, more preferably not more than 5% by mass, and further preferably not more than 2% by mass. The QI content of the pitch is a value corresponding to an amount of free carbon. If the pitch containing a large amount of free carbon is subjected to heat treatment, in a process where a mesophase sphere appears, the free carbon adheres onto a surface of the mesophase sphere to form a three-dimensional network, which inhibits growth of the sphere, and therefore a mosaic texture is easily formed. On the other hand, if the pitch having a small amount of free carbon is subjected to heat treatment, the mesophase sphere significantly grows to easily produce needle coke. The battery characteristics become further favorable by keeping the QI content within the range described above.

The pitch has a toluene-insoluble (TI) content of preferably not less than 10% by mass and not more than 70% by mass. The pitch having a low TI content has a small average molecular weight of the polycyclic aromatic compound constituting the pitch, and a high content of volatile matters, and therefore a carbonization ratio is lowered and the production cost increases, and therefore the amorphous carbon having a large amount of fine pores and having a large specific surface area is easily obtained. The pitch having a high TI content has a large average molecular weight of the polycyclic aromatic compounds constituting the pitch, and therefore the carbonization ratio increases. However, the pitch having the high TI content has high viscosity, and therefore it tends to be hardly mixed with the silicon-containing particles uniformly. The pitch and other components can be uniformly mixed by keeping the TI content within the range described above, and the composite material having preferable characteristics as a material for the negative electrode can be obtained.

The QI content and the TI content of the pitch can be measured according to a method described in JIS K2425 or a method based thereon.

An amount of the amorphous carbon comprised in the composite material has the upper limit of preferably 4 parts by mass, more preferably 6 parts by mass, and further preferably 8 parts by mass, and the lower limit of preferably 50 parts by mass, and more preferably 40 parts by mass, with respect to 100 parts by mass of the composite material.

The amounts of the graphite particles and the amorphous carbon comprised in the carbon-coated composite material can be calculated by carrying out thermogravimetric / differential thermal analysis under air atmosphere. The mass of the amorphous carbon comprised in the composite material can be calculated as a mass in terms of residual carbon of a carbon precursor used as a raw material.

Herein, the "in terms of residual carbon" means that an amount of carbon precursor is converted to an amount remaining after carbonization of the carbon precursor. The amount of the carbon precursor in terms of residual carbon is calculated based on the amount of the carbonaceous precursor and the residual carbon ratio. For example, a mass in terms of residual carbon is a value obtained by dividing a product of the mass of the carbonaceous material precursor and residual carbon ratio [% by mass] of the carbonaceous material precursor by 100.

[Additional amorphous carbon]

Additional amorphous carbon which the composite material is coated with may have the same physical properties as mentioned above as those of the amorphous carbon comprised in the composite material, or may have the different physical properties as mentioned above from those of the amorphous carbon comprised in the composite material. The additional amorphous carbon is obtained by carbonizing the carbon precursor as in the amorphous carbon comprised in the composite material.

The lower limit of the mass of the additional amorphous carbon is preferably 0.6/99.4, more preferably 0.8/99.2, and further preferably 1.0/99.0 with respect to the mass of the composite material. The upper limit of the mass of the additional amorphous carbon is preferably 20/80, more preferably 10/90, and further preferably 5/95 with respect to the mass of the composite material.

[Carbon-coated composite material]

The carbon-coated composite material has a ratio D/(A+B+C) of a square measure (D) of a peak in the region of 99 to 105 eV to a total of a square measure (A) of a peak in the region of 396 to 400 eV, a square measure (B) of a peak in the region of 283 to 288 eV and a square measure (C) of a peak in the region of 530 to 536 eV of preferably not more than 0.015, more preferably not more than 0.014, particularly preferably not more than 0.013, and most preferably not more than 0.008, as observed by X-ray photoelectron spectroscopy (XPS). When the ratio is within the range, the reductive decomposition reaction of an electrolytic solution on the surface of the active material tends to be suppressed. Note here that the peak A is derived from nitrogen. The peak B is derived from carbon. The peak C is derived from oxygen. The peak D is derived from silicon.

The X-ray photoelectron spectroscopy (XPS) can be carried out using, for example, X-ray Photoelectron Spectrometry (Quantera II) manufactured by ULVAC-PHI, Inc. The square measure (A), square measure (B), square measure (C) and square measure (D) can be measured under the following conditions.

Sample adjustment: A sample for measurement is pressed on an aluminum dish (5 mm$\phi$) and attached to a sample base (material: Cr-plated aluminum alloy) with a double-sided adhesive tape.
X-ray source: Al monochrometer 100 $\mu$m, 25 W, 15 kV
Analysis area: 100 $\mu$m$\phi$
Surface etching: not carried out
Electron-ion neutralizing gun: ON
Photoelectron take-off angle: 45°
Bond energy correction: a C-C peak in a C1s spectrum is adjusted to 284.6 eV.

The carbon-coated composite material has a surface roughness S/T of preferably not more than 7.3, more preferably not more than 7, further preferably not more than 6.5, and particularly preferably not more than 6. When the surface roughness is within this range, it is assumed that the reductive decomposition reaction of electrolytic solution is not likely to occur.

Note here that the surface roughness S/T is ratio S/T of the BET specific surface area S to the specific surface area T of sphere approximation calculated based on the volume-based cumulative particle size distribution measured by the laser diffraction method.

The specific surface area T of the sphere approximation is determined as follows.

Measurement method: Two micro spatulas of measurement sample and two droplets of a non-ionic surfactant (TRITON (registered trademark)-X manufactured by Roche Applied Science) are added to 50 mL of water, and the resultant mixture is subjected to ultrasonic dispersion for three minutes. The obtained dispersion liquid is charged into a laser diffraction particle size distribution measurement instrument to measure a volume-based cumulative particle size distribution.

Calculation method: calculation is carried out by the following formula.

$$\text{(Specific surface area of sphere approximation)} = \frac{6 \; \Sigma(V_i/d_i)}{\rho \; \Sigma(V_i)}$$

$V_i$: Relative volume
in particle diameter section i
$d_i$: Median value of particle diameters in the section i
$\rho$: Density of composite material

Note here that the true density can be measured by gas phase replacement method. The gas phase replacement method is a method to calculate the true density from the volume of helium gas in a predefined volume in an environment maintained at a constant temperature. As an apparatus for the gas phase replacement method, for example, Ultrapyc 1200e manufactured by QuantaChrome can be used.

The carbon-coated composite material has the upper limit of the BET specific surface area of preferably 3 $m^2$/g, more preferably 2 $m^2$/g, and further preferably 1.5 $m^2$/g, and the lower limit of the BET specific surface area of preferably 0.85 $m^2$/g, and more preferably 0.95 $m^2$/g. When the BET specific surface area is larger, the contact area with the electrolytic solution is larger, the reductive decomposition of the electrolytic solution is more promoted, and the charge and discharge efficiency tends to be deteriorated. Meanwhile, when the BET specific surface area is smaller, diffusion speed of the lithium ion decreases, causing lowering the charge and discharge velocity.

The carbon-coated composite material has 10% diameter $D_{10}$ in the volume-based cumulative particle size distribution as measured by a laser diffraction method of preferably not less than 1 $\mu$m, more preferably not less than 2 $\mu$m, and further preferably not less than 2.5 $\mu$m. If $D_{10}$ is excessively small, binding force between the negative electrode material and a current collector is likely to decrease to cause a problem in which the negative electrode material is peeled off upon charge and discharge. An upper limit of $D_{10}$ can be appropriately set based on a relationship with a thickness of the electrode.

The carbon-coated composite material has $I_D/I_G$ in Raman spectrum (this ratio may also be referred to as "R value") of preferably 0.2 to 4, more preferably 0.4 to 3, and further preferably 0.7 to 2. When the R value is not less than 0.2, Si is sufficiently coated with amorphous carbon, so that the cycle characteristics tend to be improved. When the R value is not more than 4, the energy density tends to be improved.

The carbon-coated composite material has $I_{Si}/I_D$ in the Raman spectrum of preferably 0.01 to 1.2, and more preferably 0.04 to 0.5. When the $I_{Si}/I_D$ of the composite material is made to be smaller, Si is sufficiently coated with amorphous carbon, and the cycle characteristics tend to be improved.

Furthermore, the carbon-coated composite material has $(I_{Si}/I_D)/(I_D/I_G)$ in the Raman spectrum of preferably 0.05 to 0.3, and more preferably 0.05 to 0.25. When this value is higher than 0.3, exposed Si is increased, so that cycle resistance may be reduced. When this value is smaller than 0.05, the amount of Si is too small, so that the electric capacity may be smaller. By reducing $I_{Si}/I_D$ with respect to the R value, Si is sufficiently coated with amorphous carbon, the cycle characteristics may tend to be improved.

Note here that $I_D$ is a peak intensity of the D-band (near 1350 $cm^{-1}$), $I_G$ is a peak intensity of the G-band (near 1580 $cm^{-1}$), and $I_{Si}$ is a peak intensity of Si.

$I_D/I_G$ and $I_{Si}/I_D$ in Raman spectrum of the carbon-coated composite material are calculated by mapping measurement of the Raman spectrum of the composite material, determining the peak intensity ($I_{DL}$) of the D-band (near 1350 $cm^{-1}$), the peak intensity ($I_{GL}$) of the G-band (near 1580 $cm^{-1}$), and a peak intensity ($I_{SiL}$) of Si at each measurement point, and arithmetically averaging $I_{DL}/I_{GL}$ and $I_{SiL}/I_{DL}$ at each measurement point.

In order to understand the coating state and the distribution state of Si, it is preferable that the measurement of the Raman spectrum is made to be shallow. In order to make the measurement depth shallow, the magnification of the objective lens of Raman microscopy is increased, and a laser spot diameter is reduced. Conditions for mapping measurement are as follow.

Measurement range: 30×30 $\mu$m, 5 $\mu$m-pitch 49-point measurement
Magnification of object lens: hundredfold
Spot diameter of laser: 1 $\mu$m

The Raman spectrum of the carbon-coated composite material is divided into absorption derived from Si near 520 $cm^{-1}$, and absorption derived from carbon material in the region of 900 to 1900 $cm^{-1}$.

The Raman spectrum of the carbon material is a composite band in which some peaks derived from structures of the carbon materials overlap to each other. Since structures of the carbon materials can be understood by the peak intensity ratio, they are divided into each peak. This method is referred to as a peak fitting method.

As the peak fitting method, well-known methods can be appropriately selected and used. Usually, a software for Raman microscopy analysis may be used. For example, Spectra Manager (registered trademark) manufactured by JASCO Corporation can be used. Analysis range of the peak fitting is 300 to 1900 $cm^{-1}$.

The peak fitting of the carbon material is carried out by separating into the following each band.

Near 1580 $cm^{-1}$: G-band derived from a graphite structure
Near 1350 $cm^{-1}$: D-band derived from turbulence of the graphite structure
Near 1500 $cm^{-1}$: D3-band derived from amorphous carbon
Near 1620 $cm^{-1}$: D2-band derived from turbulence of the graphite structure
Near 1200 $cm^{-1}$: D4-band derived from turbulence of the graphite structure

Details are described in the reference document (Carbon 43 (2005), p. 1731).

The spectrum is divided into six peaks including the above-mentioned five peaks of the carbon material and one peak derived from Si near 520 $cm^{-1}$.

When the Raman spectrum of the carbon material has a shoulder-like spectrum derived from a D2-band, the D2-band is separated by peak fitting to calculate the peak intensity ($I_G$) of the G-band.

For measurement of the Raman spectrum, for example, NRS-5100 manufactured by JASCO Corporation can be used. Measurement conditions are as follows.

Laser: 532.36 nm
Laser intensity: 10%
Object lens: 100 times
(laser spot diameter: about 1 $\mu$m)
Exposure time: 10 seconds
Integrations time: twice
Removal of cosmic ray: carried out
Measurement sample: composite powder is put on a glass plate and pressed with a glass plate to level off the surface, and measurement is carried out Peak fitting conditions are as follows.
Analysis software: analysis of carbon in Spectra Manager (registered trade mark) manufactured by JASCO Corporation
Analysis range: 300 to 1900 $cm^{-1}$
Peaks to be separated: 515 $cm^{-1}$, 1250 $cm^{-1}$, 1340 $cm^{-1}$, 1500 $cm^{-1}$, 1575 $cm^{-1}$, 1610 $cm^{-1}$

In the carbon-coated composite material of the preferable embodiment, silicon-containing particles coated with amorphous carbon are coupled to the outer periphery of the graphite particles.

In the carbon-coated composite material, it is preferable that silicon-containing particles coated with amorphous carbon are not present inside the graphite particles.

In the carbon-coated composite materials of the further preferable embodiment, silicon-containing particles, graphite particles and amorphous carbon adhere to each other with no space therebetween (see Fig. 1).

In the carbon-coated composite material to be used in the present invention, the embodiment improves conductivity between the graphite particles and the silicon-containing particles, and buffers the volume change accompanying expansion and contraction.

In one embodiment of the carbon-coated composite material, it is preferable that silicon-containing particles, graphite particles and amorphous carbon are contained, and at least a part of the amorphous carbon is located between at least two silicon-containing particles and at least one graphite particle and links them both to each other to form a composite material, and further the composite material is coated with a remaining part of the amorphous carbon (additional amorphous carbon). Furthermore, it is preferable that in a layer of the amorphous carbon in the composite material, for example, one graphite particle and a plurality of silicon-containing particles are dispersed and enclosed, and in a layer of the amorphous carbon with which the composite material is coated, neither graphite particles nor silicon-containing particles have existence.

(Production method of carbon-coated composite material)

A method for producing a carbon-coated composite material is not particularly limited as long as the method enables a carbon-coated composite material having the physical properties and characteristics to be obtained.

The method for producing a carbon-coated composite material of the preferable embodiment comprises subjecting a mixture I comprising silicon-containing particles, carbon precursor and graphite particles at a predetermined ratio to heat treatment for carbonization to obtain a composite material comprising the silicon-containing particles, the amorphous carbon and the graphite particles; mixing the obtained composite material and an additional carbon precursor with each other at a predetermined ratio to obtain a mixture II; and subjecting the obtained mixture II to heat treatment for carbonization. As the carbon precursor, mentioned can be carbon precursors described as those usable for producing composite materials. Among them, pitch is preferable.

It is preferable that the amounts of the silicon-containing particles, the carbon precursor and the graphite particles in the mixture I are respectively set at the amounts of the silicon-containing particles, the amorphous carbon and the graphite particles comprised in composite material as mentioned above after heat treatment of the raw material compound. The residual carbon ratio is a ratio of the amorphous carbon generated at the heat treatment of a carbon precursor to the carbon precursor. Based on the residual carbon ratio of the carbon precursor, the amount of the carbon precursor in the mixture I can be set such that the desired amount of the amorphous carbon is generated. Specifically, the amount of the carbon precursor can be calculated by dividing the desired amount of the amorphous carbon by the residual carbon ratio of the carbon precursor.

The mixture I comprises preferably 6 to 70 parts by mass, more preferably 12 to 50 parts by mass and further preferably 15 to 40 parts by mass of silicon-containing particles, preferably 5 to 90 parts by mass and more preferably 10 to 80 parts by mass of graphite particles, and preferably not less than 4 parts by mass, more preferably not less than 6 parts by mass and further preferably not less than 8 parts by mass and preferably not more than 50 parts by mass and more preferably not more than 40 parts by mass of carbon precursor in terms of residual carbon, to 100 parts by mass of the total amount of the silicon-containing particles, pitch in terms of residual carbon and graphite particles.

The mixture I can be obtained, for example, by melting pitch being one of carbon precursors, mixing the molten pitch and the silicon-containing particles under an inert atmosphere, pulverizing the resultant mixture, and mixing the resultant pulverized material with the graphite particles.

The mixture I can be obtained, for example, by dissolving the carbon precursor by an appropriate method to obtain a liquid phase, mixing the silicon-containing particles and the graphite particles in the resultant liquid phase, and then pulverizing the resultant material.

The mixture I can be obtained, for example, by mixing the silicon-containing particles and the graphite particles, mixing the resultant mixture with the carbon precursor, and then subjecting the mixture to mechanochemical processing. In the mechanochemical processing, a well-known device such as Hybridizer (registered trademark) manufactured by Nara Machinery Co., Ltd. or the like can be employed.

For pulverizing and mixing, a well-known device such as a ball mill, a jet mill, a rod mill, a pin mill, a rotary cutter mill, a hammer mill, an atomizer, a mortar or the like can be used. The pulverizing or mixing method according to which an oxidization degree of the silicon-containing particles is not increased is preferably applied. Oxidization is generally considered to further progress in smaller sized particles having a larger specific surface area, and therefore a device is preferably used in which pulverizing of large sized particles preferentially progresses, and pulverizing of small sized-particles does not significantly progress. For example, a means for pulverizing mainly by impact, such as the rod mill and the hammer mill, impact power tends to be preferentially transmitted to the large sized particles and not significantly transmitted to the small sized particles. In a means for pulverizing mainly by impact and shear, such as the pin mill and rotary cutter mill, the shearing force tends to be preferentially transmitted to the large sized particles and not significantly transmitted to the small sized particles. It is preferable that pulverizing and mixing are carried out, without causing progress of oxidization of the silicon containing particles, using the device. The pulverizing and mixing are conducted preferably under a non-oxidizing atmosphere in order to suppress progress of oxidization of silicon-containing particles. Specific examples of the non-oxidizing atmosphere can include an atmosphere in which inert gas such as argon gas, nitrogen gas, or the like, is filled.

A temperature during heat treatment of mixture I is not less than 200 °C and not more than 2000 °C, more preferably not less than 300 °C and not more than 1000 °C, and further preferably not less than 400 °C and not more than 800 °C. The heat treatment results in coating the silicon-containing particles or the graphite particles with the amorphous carbon, and introducing the amorphous carbon into spaces between the silicon-containing particles, between the graphite particles, and between the silicon-containing particles and the graphite particles, to link therewith. If the heat treatment temperature is excessively low, carbonization of the carbon precursor may not be sufficiently terminated and hydrogen or oxygen remains in the composite material to adversely affect battery characteristics in several cases. On the contrary, if the heat treatment temperature is excessively high, crystallization excessively progresses to cause reduction of charge characteristics or cause binding of silicon and carbon to produce a state inactive to Li ions in several cases. The heat treatment of the mixture I is preferably conducted under the non-oxidizing atmosphere. Specific examples of the non-oxidizing atmosphere can include an atmosphere in which inert gas such as argon gas or nitrogen gas is filled. The particles may form into lump by fusion during the heat treatment of the mixture I, and therefore the lump is preferably disintegrated in order to use the heat-treated product as an electrode active material. As a disintegration method, a pulverizer using impact force of a hammer or the like or a jet mill using collision of the integrated material with each other or the like is preferred.

Next, the composite material obtained by heat treatment of the mixture I, and an additional carbon precursor (for example, pitch) are mixed with each other to obtain a mixture II. The amount of the additional carbon precursor is preferably set to an amount of the additional amorphous carbon with which the composite material is coated by heat treatment of the mixture II as mentioned above. The residual carbon ratio is a ratio of the amorphous carbon generated at the heat treatment of a carbon precursor to the carbon precursor. Based on the residual carbon ratio of the carbon precursor, the amount of the additional carbon precursor in the mixture II can be set such that the desired amount of the amorphous carbon is generated. Specifically, the amount of the additional carbon precursor can be calculated by dividing the desired amount of the amorphous carbon to be coated by the residual carbon ratio of the carbon precursor.

The ratio of the mass of the composite material to be mixed herein and the mass of the additional carbon precursor in terms of residual carbon has a lower limit of 80:20, preferably 90:10, and more preferably 95:5, and an upper limit of 99.4:0.6, preferably 99.2:0.8, and more preferably 99.0:1.0.

The composite material and the additional carbon precursor (pitch) are preferably mixed with each other by the method in which a shearing force or a compression force does not easily apply. When this mixing method is employed, destruction of a composite material, exposure of silicon-containing particles, gain of surface roughness can be prevented. For foregoing mixing method, for example, a planetary centrifugal mixer, V-type mixing machine, and W-type mixing machine can be used. For example, when a planetary centrifugal mixer ARE-310 manufactured by THINKY CORPORATION is used, 25 g of powder are preferably mixed at not less than 1000 rpm and not more than 1500 rpm for not less than 5 minutes. The mixing is preferably carried out repeatedly while manually stirring and defoaming are carried out. Mixing is preferably carried out in a non-oxidizing atmosphere in order to suppress progress of oxidation of silicon-containing particles. Examples of the non-oxidizing atmosphere can include an atmosphere filled with inert gas such as argon gas or nitrogen gas.

A temperature at heat treatment of the mixture II has the lower limit of 200 °C, preferably 900 °C, and more preferably 1000 °C, and the upper limit of 2000 °C, preferably 1500 °C, and more preferably 1200 °C. Heat treatment of the mixture II allows amorphous carbon with which the composite material is coated to be generated. After the heat treatment of the mixture II, a plurality of coatings with amorphous carbon may be carried out by mixing the generated product with another carbon precursor and subjecting the generated product to heat treatment.

The negative electrode material of the present invention may be composed of only a carbon-coated composite material, or may be composed of a carbon-coated composite material, additional graphite particles, another amorphous carbon and/or additional silicon-containing particles.

The additional graphite particles may be natural graphite or artificial graphite. The additional graphite particles have a 50% diameter $D_{50}$ with the volume-based cumulative particle size distribution of preferably 1 $\mu$m to 50 $\mu$m, $d_{002}$ of preferably not more than 0.337 nm, $L_c$ of preferably not less than 50 nm and not more than 1000 nm, and BET specific surface area of preferably not less than 0.4 m$^2$/g and not more than 25 m$^2$/g. The mass ratio of the carbon-coated composite material to the additional graphite particles can be appropriately set for a desired electric capacity value.

As the additional silicon-containing particles, mentioned can be the same as those described in the silicon-containing particles to be used for production of the composite material. The mass ratio of the additional silicon-containing particles to the carbon-coated composite material can be appropriately set for a desired electric capacity value.

Examples of the other amorphous carbon can include carbon black, Ketjen black, and the like. The mass ratio of the other amorphous carbon to the carbon-coated composite material can be appropriately set for a desired electric capacity value.

Furthermore, a negative electrode material can be produced by adding fibrous carbon to the carbon-coated composite material. Examples of the fibrous carbon can include carbon nanotube, carbon nanofiber, and the like. The mass ratio of the fibrous carbon to the carbon-coated composite material can be appropriately set for a desired electric capacity value.

EXAMPLES

Hereinafter, the present invention will be specifically described by way of Examples and Comparative Examples. Examples are merely illustrative, and the present invention is not limited to the Examples described below.

Materials used in the Examples and Comparative Examples are as follows.

Silicon-containing particles: Silicon particles having specific surface area of 70 m$^2$/g Petroleum pitch: softening point of 250 °C, TI: 48%, QI: 0.18%, residual carbon ratio: 52%
Graphite particles: $d_{002}$ = 0.336 nm, Lc = 130 nm, $D_{50}$ = 7 μm

<Example 1>

Into a separable flask, 40 parts by mass of silicon-containing particles and 60 parts by mass of petroleum pitch were charged. An inert atmosphere was kept by flowing nitrogen gas, and temperature was increased to 250 °C. Disper was rotated at 1000 rpm for stirring and uniformly mixing the petroleum pitch and the silicon-containing particles. The resultant mixture was cooled and solidified, and charged into a rotary cutter mill. The resultant product was disintegrated with high speed at 25, 000 rpm for one minute, while an inert atmosphere was kept by flowing nitrogen gas to obtain a disintegrated product.

Into a rotary cutter mill, 47.5 parts by mass of the resultant disintegrated product (the mass of pitch in terms of residual carbon was 33.8 parts by mass) and 66.2 parts by mass of graphite particles were charged, and were stirred and mixed with high speed at 25, 000 rpm for one minute, while an inert atmosphere was kept by flowing nitrogen gas. The resultant mixture was put in a firing furnace, temperature was increased to 600 °C at 150 °C/h and held at 600 °C for one hour under flow of nitrogen gas. The fired product was cooled to room temperature, removed from the firing furnace, disintegrated, and classified by a sieve having an opening of 45 μm to obtain a composite material (a) as an undersize product.

To 94 parts by mass of the composite material (a), 6 parts by mass of petroleum pitch was added (the ratio of mass of the composite material (a) to the mass of petroleum pitch in terms of residual carbon was 96.8:3.2), mixing using a planetary centrifugal mixer at 1000 rpm for 5 minutes and mixing by manual stirring for 2 minutes were repeated twice, followed by defoaming for 30 seconds to obtain a mixture of the composite material (a) and the petroleum pitch. The mixture was placed in a firing furnace, temperature was increased to 1050 °C at 150 °C/h and held at 1050 °C for one hour under flow of nitrogen gas. The fired product was cooled to room temperature, removed from the firing furnace, disintegrated, and classified by a sieve having an opening of 45 μm to obtain a carbon-coated composite material (b) as an undersize product.

<Example 2>

To 98 parts by mass of the composite material (a), 2 parts by mass of petroleum pitch was added (the ratio of mass of the composite material (a) to the mass of petroleum pitch in terms of residual carbon was 98.9: 1.1), mixing using a planetary centrifugal mixer at 1000 rpm for 5 minutes and mixing by manual stirring for 2 minutes were repeated twice, followed by defoaming for 30 seconds to obtain a mixture of the composite material (a) and the petroleum pitch. The mixture was placed in a firing furnace, temperature was increased to 1050 °C at 150 °C/h and held at 1050 °C for one hour under flow of nitrogen gas. The fired product was cooled to room temperature, removed from the firing furnace, disintegrated, and classified by a sieve having an opening of 45 μm to obtain a carbon-coated composite material (c) as an undersize product.

<Example 3>

A carbon-coated composite material (d) was obtained in the same manner as in Example 2 except that repeating of mixing at 1000 rpm for 5 minutes using a planetary centrifugal mixer and mixing by manual stirring for 2 minutes twice was changed to mixing at 1000 rpm for 3 minutes and mixing at 6000 rpm for 10 minutes using an MP mixer manufactured by NIPPON COKE & ENGINEERING CO., LTD.

<Comparative Example 1>

A carbon-coated composite material (e) was obtained in the same manner as in Example 2 except that 1 part by mass of petroleum pitch was added to 99 parts by mass of composite material (a) (the ratio of the mass of composite material (a) to the mass of petroleum pitch in terms of residual carbon was 99.5:0.5) instead of adding 2 parts by mass of petroleum pitch to 98 parts by mass of composite material (a).

<Comparative Example 2>

Into a separable flask, 35.7 parts by mass of silicon-containing particles and 64.3 parts by mass of petroleum pitch were charged. An inert atmosphere was kept by flowing nitrogen gas, and temperature was increased to 250 °C. Disper was rotated at 1000 rpm for stirring and uniformly mixing the petroleum pitch and the silicon-containing particles. The resultant mixture was cooled and solidified, and charged into a rotary cutter mill. The resultant product was disintegrated with high speed at 25, 000 rpm for one minute, while an inert atmosphere was kept by flowing nitrogen gas to obtain disintegrated product.

Into the rotary cutter mill, 56 parts by mass of the resultant disintegrated product (the mass of pitch in terms of residual carbon was 39 parts by mass) and 61 parts by mass of graphite particles were charged, and were stirred and mixed with high speed at 25, 000 rpm for one minute, while an inert atmosphere was kept by flowing nitrogen gas. The resultant mixture was put in a firing furnace, temperature was increased to 600 °C at 150 °C/h and held at 600 °C for one hour under flow of nitrogen gas. The fired product was cooled to room temperature, removed from the firing furnace, disintegrated, and classified by a sieve having an opening of 45 μm to obtain a composite material (f) as an undersize product.

<Comparative Example 3>

The composite material (a) was placed in a firing furnace, temperature was increased to 1050 °C at 150 °C/h and held at 1050 °C for one hour under flow of nitrogen gas. The fired product was cooled to room temperature, removed from the firing furnace, disintegrated, and classified by a sieve having an opening of 45 μm to obtain a composite material (g) as an undersize product.

For the carbon-coated composite materials (b) to (e), composite materials (f) and (g) obtained in Examples and Comparative Examples, various physical property values were measured under the above-described conditions. Evaluation of battery characteristics was carried out under the conditions described below. Measurement results are described in Tables 3 and 4.

(Evaluation of battery characteristics)

1. Measurement of discharge capacity

Ninety parts by mass of carbon-coated composite material (Examples 1 to 3, Comparative Example 1) or the composite material (Comparative Examples 2 to 3), 3 parts by mass of carbon black (manufactured by TIMCAL), 2 parts by mass of vapor grown carbon fiber (VGCF (registered trademark)-H, manufactured by Showa Denko K.K.), and an aqueous solution containing 2.5 parts by mass of carboxymethyl cellulose (CMC) were mixed with each other, and kneaded by a planetary centrifugal mixer to obtain paste for a negative electrode. The paste for a negative electrode was uniformly applied on a 20 μm thick copper foil using a doctor blade, dried on a hot plate, and then dried in vacuum. The resultant product was pressed by roll press machine to obtain a negative electrode sheet having an electrode mixture density of 1.6 g/cm$^3$. The negative electrode sheet was punched into circular shape having a diameter of 16 mmφ to obtain a negative electrode piece.

To a mixed solvent in which ethylene carbonate, ethyl methyl carbonate and diethyl carbonate were mixed in a volume ratio of 3:5:2, 1% by mass of vinylene carbonate (VC) and 10% by mass of fluoroethylene carbonate (FEC) were mixed. Into the mixture, further electrolyte LiPF$_6$ was dissolved at a concentration of 1 mol/L to obtain an electrolytic solution.

The negative electrode piece was dried in vacuum at 80 °C for 12 hours, soaked in the electrolytic solution, and subjected to vacuum impregnation at -0.95 atm for 10 minutes. The negative electrode piece impregnated with an electrolytic solution was placed at the positive electrode side of a 2320-type coin cell, a separator impregnated with an electrolytic solution was put thereon. Further, 1.7 mm thick metallic lithium punched into 20 mmφ was put thereon, and the negative electrode side of the coin cell was placed as a lid, and caulked by a calking machine to obtain a half cell.

Firstly, this half cell was subjected to constant current charge at 0.1 C. From a time point when voltage reached 10 mV, constant voltage charge was carried out. Charge was stopped at a time point when current reached 0.01C. Next, constant current discharge was carried out at 0.1C. At a time point when the voltage reached 1.5 V, discharge was stopped. Discharge capacity was calculated by dividing discharge electric amount by a mass of the active material.

2. Measurement of discharge retention ratio To 48 parts by mass of Li(Ni$_{0.6}$Mn$_{0.2}$Co$_{0.2}$)O$_2$, 1 part by mass of carbon black (manufactured by TIMCAL) and 1 part by mass of polyvinylidene fluoride (PVdF), appropriate quantities of N-methylpyrrolidone was added, while the resultant mixture was stirred and mixed, to obtain a paste for positive electrode. Onto 20 μm thick aluminum foil, about 15.4 mg/cm$^2$ of the paste for positive electrode was applied using a roll coater and was dried. Next, the resultant material was pressed between pressure rolls to obtain a positive electrode sheet having an electrode mixture density of 3.3 to 3.5 g/cm$^3$.

Composite material and artificial graphite particles were mixed with each other so that the discharge capacity was 600 mAh/g to obtain a mixture. Ninety parts by mass of the mixture, 1.2 parts by mass of carbon black (manufactured by TIMCAL), 0.4 part by mass of vapor grown carbon fiber (VGCF (registered trademark)-H, manufactured by Showa Denko K.K.), 0.4 part by mass of carbon nanotube (fiber diameter: 15 nm), and an aqueous solution containing 8 parts by mass of CMC were mixed with each other, and kneaded by a planetary centrifugal mixer to obtain paste for a negative electrode.

The paste for a negative electrode was uniformly applied on a 20 $\mu$m thick copper foil using a doctor blade while the thickness was adjusted so that the ratio QC/QA of the capacity (QA) of the negative electrode sheet to the capacity (QC) of the positive electrode sheet was 1.2, dried on a hot plate, and then dried in vacuum. The resultant product was pressed by roll press machine to obtain a negative electrode sheet having an electrode density of 1.6 g/cm$^3$.

To a mixed solvent in which ethylene carbonate, ethyl methyl carbonate and diethyl carbonate were mixed in a volume ratio of 3:5:2, 1% by mass of vinylene carbonate (VC) and 1% by mass of fluoroethylene carbonate (FEC) were mixed. Into the mixture, further electrolyte $LiPF_6$ was dissolved at a concentration of 1 mol/L to obtain an electrolytic solution.

In a glove box kept in an atmosphere of dry argon gas having a dew point of not more than -80°C, the negative electrode sheet and the positive electrode sheet were punched, respectively, to obtain a negative electrode piece and a positive electrode piece each having a square measure of 20 cm$^2$. An aluminum tab was attached to the aluminum foil in the positive electrode piece, and a nickel tab was attached to the copper foil in the negative electrode piece, respectively. A microporous film made of polypropylene was interposed between the negative electrode piece and the positive electrode piece, and the resultant material in the sandwiched state was packed in an aluminum laminate. Then, the electrolytic solution was poured thereinto, and an opening portion was sealed to obtain a full cell.

The full cell was subjected to pre-stage charge and discharge in a manner as shown in Table 1. After the pre-stage charge and discharge were carried out, charge and discharge were repeated in 481 cycles in a manner shown in Table 2. A value was obtained by dividing the discharge capacity of the 450th cycle by the discharge capacity of the first cycle, and the value was defined as a discharge amount retention ratio.

[Table 1]
(Start pre-stage charge/discharge)
↓ 12h pause
0.02C constant current charge,
    stop after 6 h 45 min
↓ 12h pause
0.05C constant current charge,
    stop when voltage reaches 4.2 V
↓ 10 min pause
0.05C constant current charge,
    stop when voltage reaches 3.0 V
↓ 10 min pause
0.1C constant current-constant voltage charge,
    stop at reaching 0.02C
    after voltage reaches 4.3 V
↓ 10 min pause
0.1C constant current discharge,
    stop when voltage reaches 3.0 V
↓ 10 min pause
0.2C constant current-constant voltage charge,
    stop at reaching 0.02C
    after voltage reaches 4.3 V
↓ 10 min pause
0.2C constant current discharge,
    stop when voltage reaches 3.0 V
↓ 10 min pause
0.2C constant current-constant voltage charge,
    stop at reaching 0.02C
    after voltage reaches 4.3 V
↓ 10 min pause
0.2C constant current discharge,
    stop when voltage reaches 3.0 V
↓ 10 min pause

(continued)

0.1C constant current-constant voltage charge,

stop at reaching 0.02C

after voltage reaches 4.3 V

↓ 10 min pause

0.1C constant current discharge,

stop when voltage reaches 3.0 V

↓ 10 min pause

(Move to cycle test)

[Table 2]

1 cycle:

1C constant current-constant voltage charge,

stop at reaching 0.05C

after voltage reaches 4.3 V

↓ 30 min pause

1C constant current discharge,

stop when voltage reaches 3.0 V

↓ 30 min pause

[Table 3]

Table 3

|  | Compo. material | XPS D/ (A+B+C) | Surface roughness S/T | Raman $I_D/I_G$ | Raman $I_{Si}/I_D$ | Raman $(I_{Si}/I_D) / (I_D/I_G)$ | BET S.S.A(S) [m²/g] | Sphere approx. S.S.A (T) [m²/g] |
|---|---|---|---|---|---|---|---|---|
| Ex.1 | b | 0.008 | 5.88 | 0.99 | 0.21 | 0.21 | 0.994 | 0.169 |
| Ex.2 | c | 0.013 | 6.68 | 1.01 | 0.22 | 0.22 | 1.54 | 0.231 |
| Ex.3 | d | 0.014 | 6.30 | 0.70 | 0.13 | 0.19 | 2.66 | 0.423 |
| Comp.Ex. 1 | e | 0.016 | 6.14 | 0.81 | 0.24 | 0.30 | 1.57 | 0.256 |
| Comp.Ex. 2 | f | 0.025 | 13.4 | 0.65 | 0.28 | 0.43 | 3.89 | 0.290 |
| Comp.Ex. 3 | g | 0.018 | 6.60 | 0.75 | 0.40 | 0.53 | 1.62 | 0.245 |

[Table 4]

Table 4

|  | Compo. material | Discharge Capacity [mAh/g] | Discharge Retention Ratio [%] |
|---|---|---|---|
| Ex.1 | b | 784 | 68.2 |
| Ex.2 | c | 820 | 61.4 |
| Ex.3 | d | 792 | 61.2 |
| Comp.Ex.1 | e | 810 | 58.4 |
| Comp.Ex.2 | f | 734 | 9.8 |
| Comp.Ex.3 | g | 820 | 56.2 |

**Claims**

1. A negative electrode material for a lithium ion secondary battery, comprising

   a carbon-coated composite material comprising a composite material comprising silicon-containing particles, graphite particles and an amorphous carbon, and
   an additional amorphous carbon with which the composite material is coated,
   wherein the carbon-coated composite material has a ratio D/(A+B+C) of a square measure (D) of a peak in the region of 99 to 105 eV to a total of a square measure (A) of a peak in the region of 396 to 400 eV, a square measure (B) of a peak in the region of 283 to 288 eV, and a square measure (C) of a peak in the region of 530 to 536 eV, of not more than 0.015, as observed by X-ray photoelectron spectroscopy (XPS), and
   a ratio S/T of a BET specific surface area S to a specific surface area T of sphere approximation calculated based on a volume-based cumulative particle size distribution measured by a laser diffraction method, of not more than 7.3.

2. The negative electrode material for a lithium ion secondary battery according to claim 1, wherein the carbon-coated composite material has:

   $I_D/I_G$ of 0.2 to 4,
   $I_{Si}/I_D$ of 0.01 to 1.2, and
   $(I_{Si}/I_D)/(I_D/I_G)$ of 0.05 to 0.3, as determined by Raman spectroscopy.

3. The negative electrode material for a lithium ion secondary battery according to claim 1 or 2, wherein the graphite particles have:

   $d_{002}$ of not more than 0.337 nm, and
   $L_c$ of 50 nm to 1000 nm.

4. The negative electrode material for a lithium ion secondary battery according to any one of claims 1 to 3, wherein the silicon-containing particles, the graphite particles and the amorphous carbon adhere to each other with no space therebetween in the carbon-coated composite material.

5. The negative electrode material for a lithium ion secondary battery according to any one of claims 1 to 4, further comprising additional graphite particles.

6. A slurry or a paste, comprising the negative electrode material for a lithium ion secondary battery according to any one of claims 1 to 5, and a binder.

7. An electrode comprising the negative electrode material for a lithium ion secondary battery according to any one of claims 1 to 5, and a binder.

8. A lithium ion secondary battery comprising the negative electrode material for a lithium ion secondary battery according to any one of claims 1 to 5.

9. A method for producing a carbon-coated composite material, the method comprising:

   heat-treating a mixture I at not less than 200 °C and not more than 2000 °C to obtain a composite material comprising silicon-containing particles, an amorphous carbon and graphite particles, the mixture I comprising 6 to 70 parts by mass of the silicon-containing particles, 4 to 50 parts by mass of pitch in terms of residual carbon, 5 to 90 parts by mass of the graphite particles based on 100 parts by mass of a total of an amount of the silicon-containing particles, an amount of the pitch in terms of residual carbon and an amount of the graphite particles,
   mixing the obtained composite material and an additional pitch with each other such that a ratio of a mass of the obtained composite material to a mass of the additional pitch in terms of residual carbon is 80/20 to 99.4/0.6 to obtain a mixture II,
   and then
   heat-treating the obtained mixture II at not less than 200 °C and not more than 2000 °C.

**10.** The method according to claim 9, wherein a temperature in the heat-treating of the mixture I is not less than 300 °C and not more than 1000 °C, and a temperature in the heat-treating of the mixture II is not less than 800 °C and not more than 1500 °C.

[Fig. 1]

## INTERNATIONAL SEARCH REPORT

| | International application No. |
| --- | --- |
| | PCT/JP2018/030023 |

| A. CLASSIFICATION OF SUBJECT MATTER |
| --- |
| Int.Cl. H01M4/38(2006.01)i, H01M4/36(2006.01)i, H01M4/48(2010.01)i, H01M4/587(2010.01)i |
| According to International Patent Classification (IPC) or to both national classification and IPC |

| B. FIELDS SEARCHED |
| --- |
| Minimum documentation searched (classification system followed by classification symbols) Int.Cl. H01M4/38, H01M4/36, H01M4/48, H01M4/587 |

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
| --- |
| |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2016-126976 A (GS YUASA INTERNATIONAL LTD.) 11 July 2016 (Family: none) | 1-10 |
| A | JP 2014-519135 A (SHOWA DENKO KABUSHIKI KAISHA) 07 August 2014 & US 2013/0295446 A1 & WO 2013/164914 A1 | 1-10 |
| A | JP 2013-101920 A (TOYOTA INDUSTRIES CORPORATION) 23 May 2013 & WO 2013/054481 A1 | 1-10 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 August 2018 (29.08.2018) | 11 September 2018 (11.09.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/030023 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-119176 A (TOSHIBA CORP.) 15 April 2004 & US 2004/0115535 A1 & CN 1492533 A | 1-10 |
| A | JP 2015-185491 A (SANYO ELECTRIC CO., LTD.) 22 October 2015 (Family: none) | 1-10 |
| A | WO 2013/099263 A1 (PANASONIC IP MANAGEMENT CO., LTD.) 04 July 2013 & US 2014/0322591 A1 & CN 103947029 A | 1-10 |
| A | WO 2013/094668 A1 (SANYO ELECTRIC CO., LTD.) 27 June 2013 & US 2014/0356724 A1 & CN 104011924 A | 1-10 |
| A | JP 2016-167352 A (HITACHI MAXELL, LTD.) 15 September 2016 (Family: none) | 1-10 |
| A | WO 2012/141166 A1 (THE YOKOHAMA RUBBER CO., LTD.) 18 October 2012 & US 9165720 B2 & DE 112012001940 B & CN 103460323 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004259475 A
- WO 2014007161 A
- JP 2008112710 A
- JP 2002231225 A
- WO 2012000858 A
- WO 2014003135 A

**Non-patent literature cited in the description**

- *117th Committee material 117-71-A-1(1963) Japan Society for the Promotion of Science,* 1963
- *117th Committee material 117-121-C-5 (1972) Japan Society for the Promotion of Science,* 1972
- *Carbon,* 1963, 25-34
- *Carbon,* 2005, vol. 43, 1731